# EUROPEAN PATENT APPLICATION

(11) **EP 0 995 699 A1**
(43) Date of publication of application: **26.04.2000**
(21) Application number: 99119874.8
(22) Date of filing: 07.10.1999
(51) Int. Cl.: B65G 21/18, B65G 17/06

(54) **Conveyor belt with cross bars and side chains with antifriction elements for medium-light material handling**

(30) Priority: 09.10.1998 IT PD980236; 09.04.1999 IT PD990075
(71) Applicant: Graziani ,Stefano, 35018 S. Martino di Lupari (IT)
(72) Inventor: Graziani ,Stefano, 35018 S. Martino di Lupari (IT)
(74) Representative: Gustorf, Gerhard, Dipl.-Ing.

(57) **Abstract**

The invention is a new conveyor belt (1,2,3) comprising cross bars (3) driven by two lateral series of alternated modular elements (1,2) with U-shaped section, provided with holes (1.21,1.11,1.21) for the fastening to the ends of the cross bars (3) of the conveyor belt. The plane elements (2) are provided with slots (2.2) near their ends, said slots (2.2) being suitable for sliding around the ends of the cross bars (3) included between the two side-by-side plane parts (1.1,1.2) the U-shaped elements. The conveyor belt is set in motion by pins (5.1) acting on the wings of the U-shaped elements (1). Each pair of wings of the U-shaped elements (1) is provided with a roller (1.3) in order to facilitate the sliding of the inner part of the conveyor belt. Antifriction elements (3.2,3.3) slide on other antifriction elements (3.1) applied to the fixed guides (6) of the conveyor belt.

## Description

The invention concerns the systems used to transport light objects along several processing stations; in particular, it concerns conveyance systems with conveyor belts, transport chains and similar devices.

The known conveyor belts comprise two parallel link chains connected to each other by means of cross bars that are perpendicular to the chain axis and generally parallel to one another. The objects to be transported are positioned on cross bars that are perpendicular to the motion of the conveyor belt.

These conveyor belts present some drawbacks:
- the chains cause considerable problems, because they slide on seats that do not keep them tightened and because to drive them it is necessary to use properly shaped gear wheels;
- when it bends sidewards the conveyor belt is subjected to deformation, thus moving the cross bars considerably away from one another on the outer edge of the curve and making it necessary to introduce other components, like iron spirals, rings, etc. between said cross bars; all this increases construction and maintenance costs and also makes the operation of the conveyor belt difficult.

The applicant, in his previous application n. PD 96 A 185 described a new conveyor belt comprising cross bars, parallel to one another and perpendicular to the belt motion direction, wherein the ends of each cross bar are fixed on to modular connection elements that make up the chain itself.

The cross-shaped modular elements are of two types:
- a primary element provided with two holes symmetrically positioned at its sides, and wherein two primary modular elements are put side by side and kept at a suitable distance, so that a secondary front element and a secondary rear element can be positioned in the space delimited by them and slide therein;
- a secondary element provided with two slots.

A pair of pins keeps said primary elements at a suitable distance, as mentioned above, with the front pin of the primary element inserted in the rear slot of the front secondary element and the rear pin of the primary element inserted in the front slot of the rear secondary element.

The object of the present invention is a new conveyor belt comprising cross bars that are generically parallel to one another and connected to one another by specially shaped side modular elements.

The new conveyor belt comprises cross bars driven by two lateral series of alternated modular elements with U-shaped section, connected to one another by plane elements, constituted by an element whose plane development can generically be compared to an H-shaped figure with a T at its centre, and wherein the upper part of the T is bent and positioned so that it is parallel to the central part of the H, with a space sufficient for the sliding of the plane elements, while the ends of the H are parallel in pairs and perpendicular to the U-shaped section, thus forming wing-shaped elements. The parallel parts of the U-shaped section are provided with holes for the fastening to the ends of the conveyor belt cross bars, while the plane elements are provided with slots near their ends, said slots being suitable for allowing the cross bar ends included between the two plane side-by-side parts of the U-shaped elements to slide into them.

The U-shaped element and/or the plane element may be higher than the cross bars, that is, they may be provided with a plane extension directed upwards with respect to the holes and slots, which means that one side, preferably the inner one, is higher than the other, in such a way as to contain the products to be transported.

The new conveyor belt is set in motion by single or double parallel chains that engage single or double gear wheels provided, at regular intervals, with pins acting on the wings of the U-shaped elements.

Futhermore, in the new conveyor belt each pair of wings of the U-shaped elements is provided with a pin or cylindrical roller, suitable for engaging discs provided with notches on their edges, and wherein the roller facilitates the sliding of the inner part of the conveyor belt when there are sharp curves.

Even if the various surfaces involved are smooth, there is always some friction and continuous use increases the wear of said surfaces and therefore friction.

In some cases low-friction elements are applied to the guides.

Even if friction is reduced, the sliding of the metal elements quickly leads to the wear of said low-friction elements.

Consequently, the modular elements and the guides must be replaced frequently owing more to the wear due to sliding than to the wear deriving from deformation or breakages.

The change of the modular elements and guides is very expensive and, moreover, it requires that the system be stopped for the whole duration of the replacement operations.

Furthermore, if the modular elements are rather simple to be replaced, since it is sufficient to replace the worn elements with new ones at a given point of the conveyor belt course, changing the guides is much more difficult. In fact, it is necessary to work on the whole course of the conveyor belt, even on points that are difficult to reach, to remove the worn guides, to install the new ones and adjust their position in order to guarantee the precise and efficient sliding of the conveyor belt along its course.

To eliminate all the above mentioned drawbacks, a new type of conveyor belt has been designed and implemented, which comprises cross bars connected by means of specially shaped side modular elements and is equipped with antifriction elements.

Practically, the modular elements that connect and drive the cross bars are joined to antifriction elements that cover the contact and sliding surfaces of the modular elements themselves.

Equally, the guides of the whole conveyor belt are joined to antifriction elements that cover the contact and sliding surfaces.

Both the additional antifriction elements of the modular elements of the conveyor belt and the additional antifriction elements of the guides are made of self-lubricating materials with very low friction coefficient, like nylon and Teflon.

The additional antifriction elements are joined to the modular elements and to the guides through fastening means suitable for preventing any reciprocal movement of the additional antifriction elements, the modular elements and the guides, at the same time permitting the rapid change of said additional antifriction elements.

If also the cross bars of the conveyor belt slide on the guides, their contact part is covered with cylindrical antifriction elements.

It is possible to provide the additional antifriction elements of the guides and of the modular elements with protrusions or walls, in such a way as to permit the coupling of the additional antifriction elements of the modular elements and the additional antifriction elements of the guides, thus facilitating the contact between the conveyor belt and the guides, both in the forward and in the return course, when the position of the conveyor belt is inverted.

The following is just an example among many possible applications of the invention in question, illustrated in the attached tables.

Table 1 and 2 show a possible implementation of the modular connection elements.

The modular connection elements are divided in two categories:
- the primary elements (1), which support the ends of two cross bars (3), are provided with projections for the drive movement and allow the conveyor belt to rest on the guides;
- the secondary elements (2), which support the end of the cross bars (3) and connect the primary elements (1).

The primary elements (1) are obtained by cutting and bending a plate or metal sheet with suitable thickness.

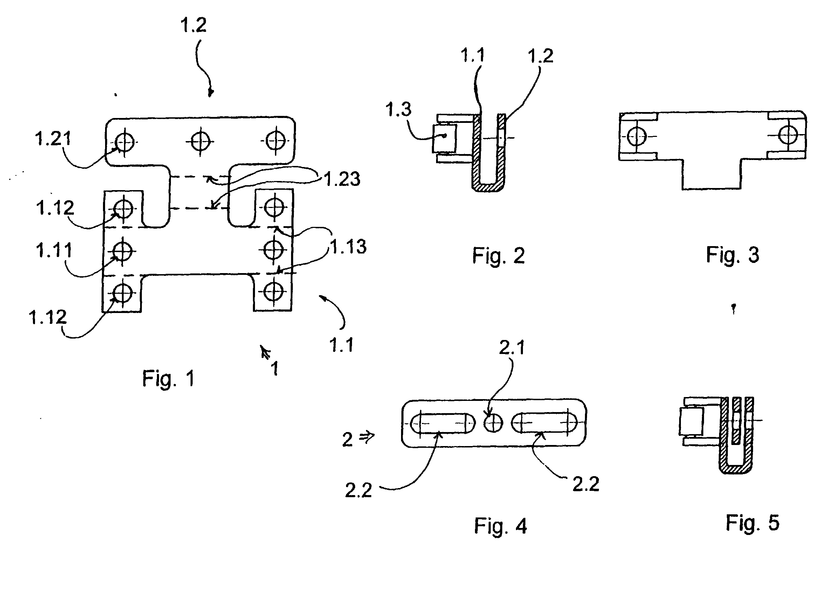

The development of a primary element (1) (figure 1) can be generically compared to an H-shaped figure (1.1) with the addition of a T (1.2) on its central part.

The primary element (1) is provided with holes (1.11, 1.12, 1.21), in particular with one hole (1.22) on the middle point of the upper part of the T-shaped portion (1.2), with two holes (1.21) on the ends of the upper part of the T-shaped portion (1.2), and with three holes in correspondence with the ends (1.12) and with the middle point (1.11) of the wings of the H-shaped part (1.1).

The plane figure constituted as described above is then bent along two cross lines (1.23, broken in the figure) of the vertical portion of the T-shaped part (1.2) and along four cross lines (1.13, broken in the figure) of the wings of the H-shaped part (1.1).

A section view of the element obtained after the bending operation can be seen in figure 2, while a side view of the same can be seen in figure 3: it is composed of two rectangular foils positioned side by side (the cross bar of the T-shaped part and the central strip of the H-shaped part) and joined at the bottom by a U-bent section (the vertical portion of the T-shaped part); one of the two rectangular foils positioned side by side is provided with wings that are perpendicular to it and parallel to one another in pairs (the ends of the wings of the H-shaped part). The various holes are thus aligned as follows: the two holes (1.21) at the ends of the T-shaped part (1.2) are aligned with the holes (1.11) provided on the middle point of the wings of the H-shaped part (1.1), the end holes (1.12) of the wings of the H-shaped part (1.1) are aligned in pairs, each one of said pairs being provided with a pin (1.3).

The distance between the two side-by-side rectangular foils of the primary element (1) is such as to allow at least one secondary element (2) to be housed and to slide therein.

The secondary elements (2, figure 4) are constituted by a small plate obtained by cutting a plate or metal sheet with suitable thickness and have a generically rectangular shape that can be compared to the upper part of the T-shaped portion (1.2) of the primary element (1).

Also the secondary element (2) is provided with holes and in particular it is provided with a central hole (2.1) and two lateral slots or wide holes (2.2).

Figure 5 shows a section in which it can be clearly seen how a secondary element (2) is housed between the rectangular foils of a primary element (1).

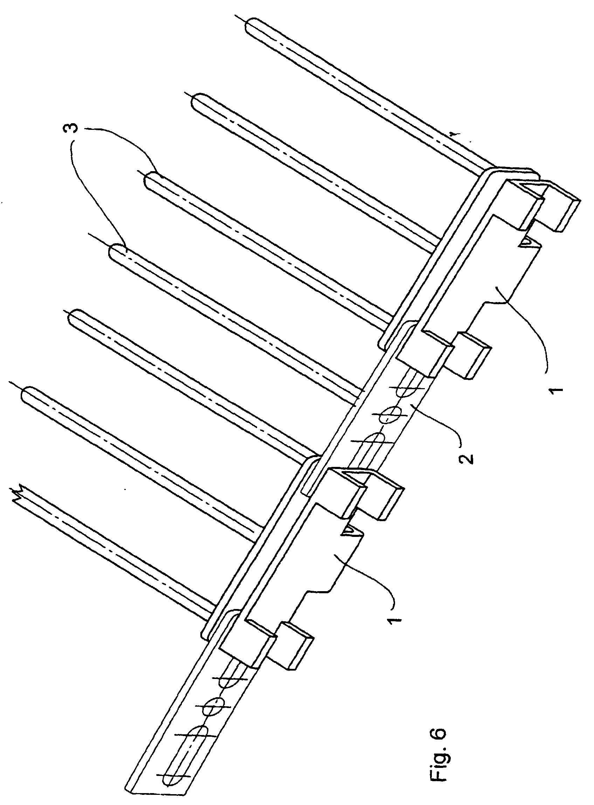

Table 2 (figure 6) shows an axonometric view of a part of the new conveyor belt, in which it is possible to observe how each secondary element (2) serves as connection means between two primary elements (1). In the same figure it is possible to see how the cross bars (3) are joined to the primary (1) and secondary elements (2). Said cross bars (3) are inserted in the aligned holes (1.21, 1.11) of the primary elements (1) and in the central hole (2.1) of the secondary elements (2).

The cross bars (3) inserted in the holes (1.21, 1.11) of the primary elements (1) pass also through the two lateral slots or wide holes (2.2) of the secondary elements (2), so that said secondary elements (2) can slide in the primary elements (1) around the ends of the cross bar (3) for the whole length of said lateral slots or wide holes (2.2).

The new conveyor belt comprises two parallel rows of alternated primary (1) and secondary elements (2) joined by cross bars (3) that constitute the support surface of the new conveyor belt.

Table 3 shows the driving system of the new conveyor belt.

Figura 7 shows a plan view of said driving system, while figures 8a and 8b show a vertical section of the same.

Gear wheels (4) with one or two parallel crown gears drive one (or two) chain (5) of the known type, which are connected by pins (5.1) at regular intervals.

Said pins (5.1) rest on the corner of the side wings of the primary elements (1).

In figures 8a and 8b it is possible to observe also the guide (6) that accompanies and leads the new conveyor belt along its course.

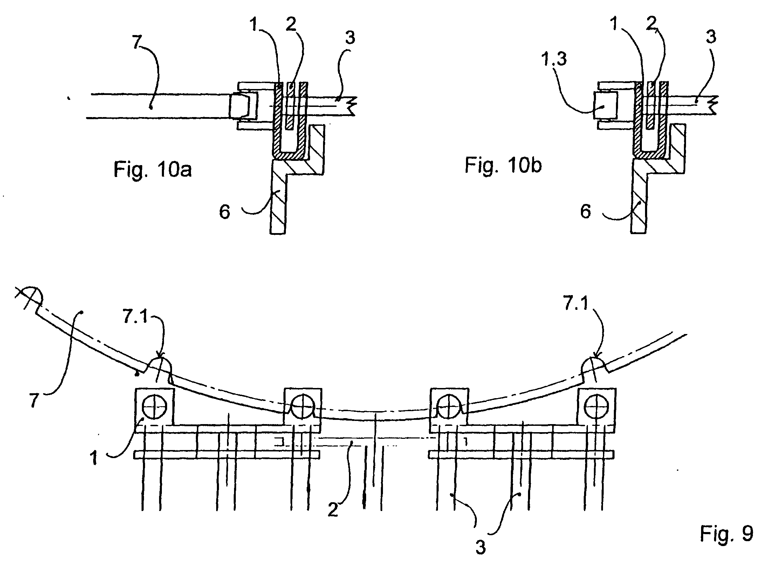

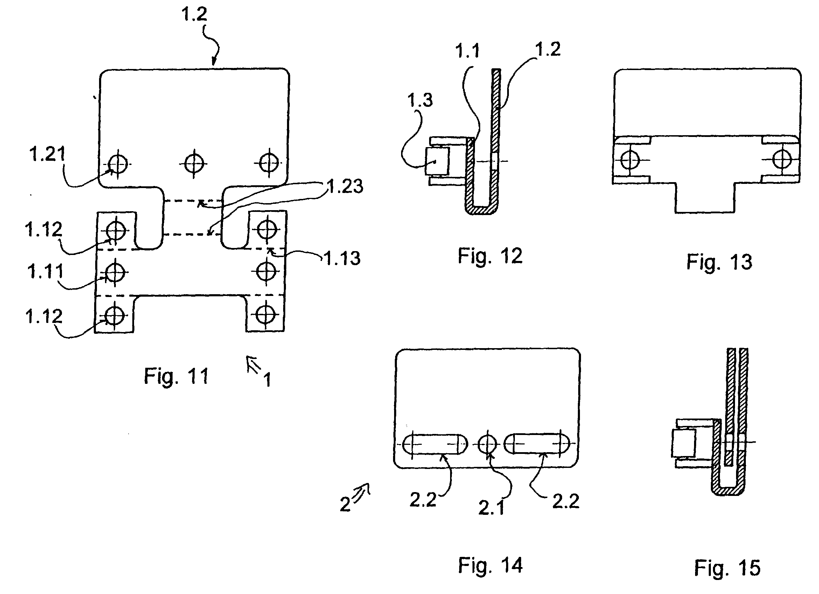

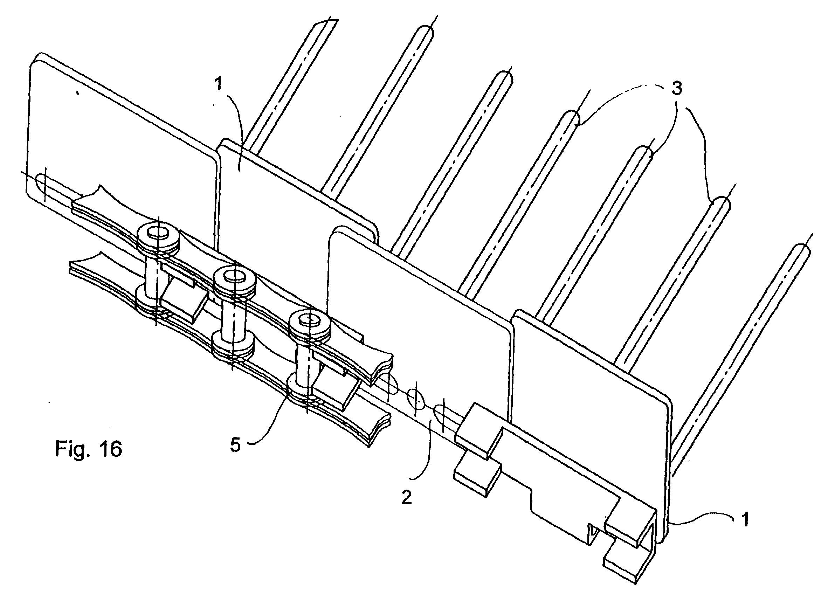

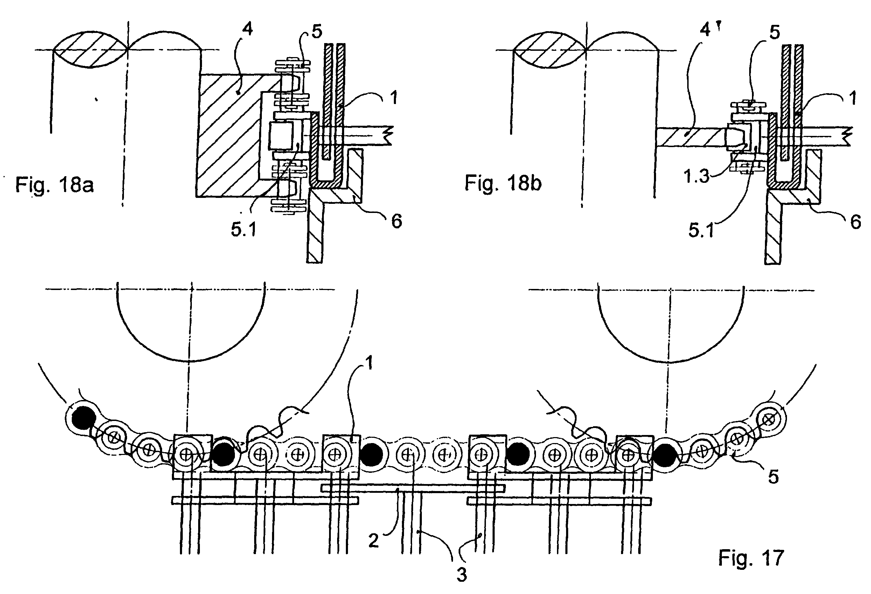

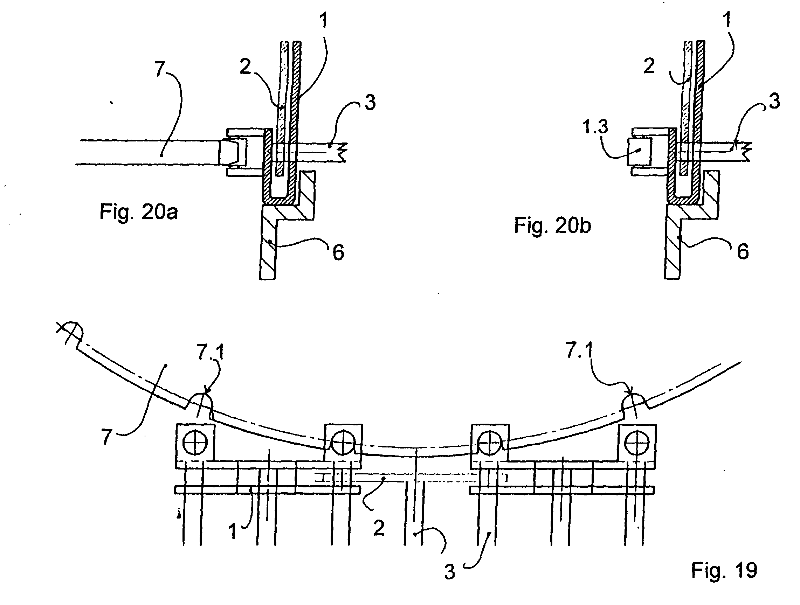

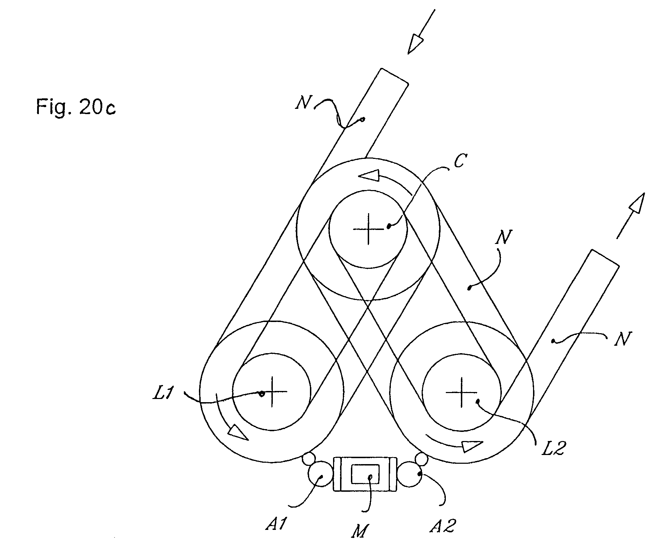

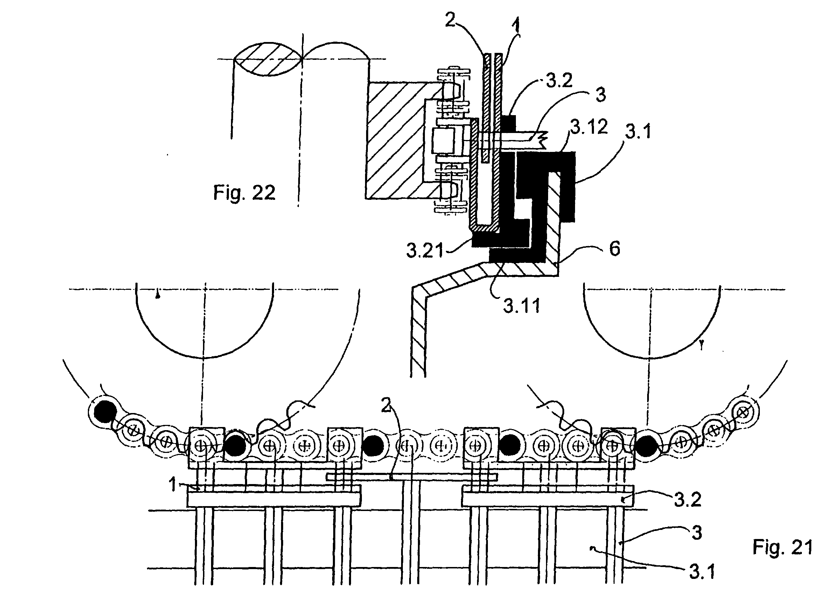

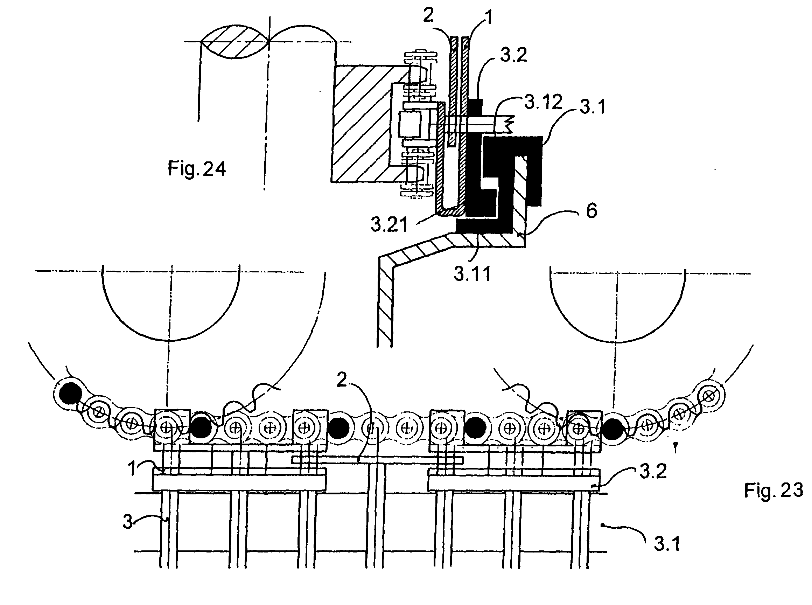

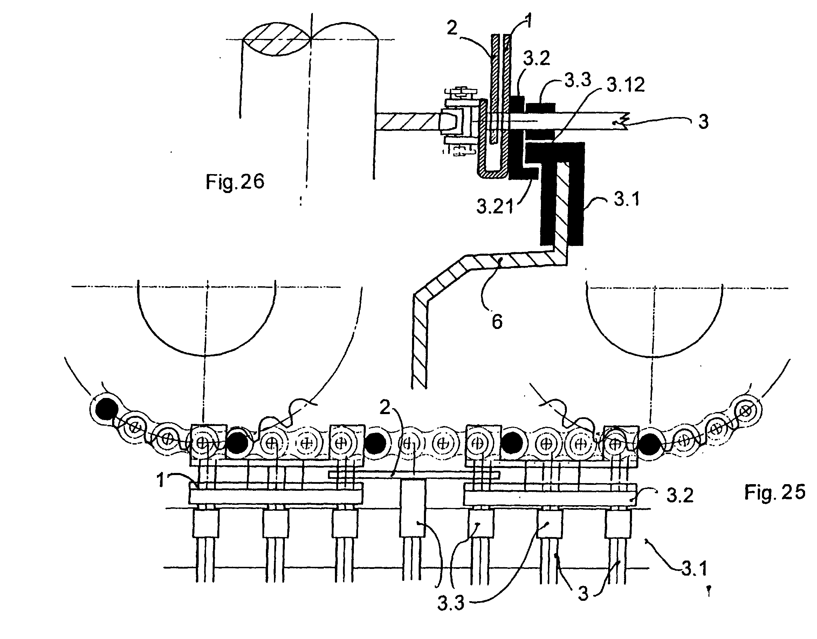

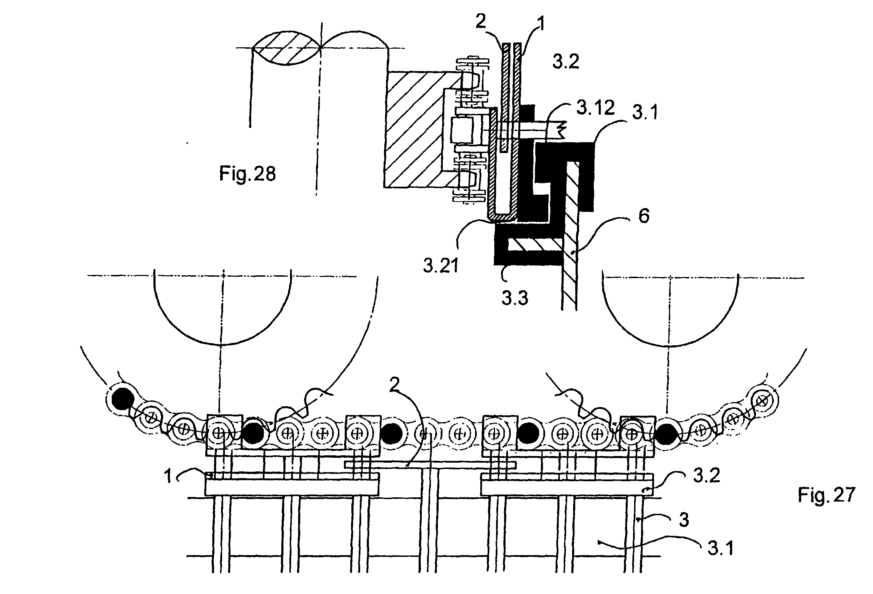

Table 4 (figures 9, 10) shows a second possible driving system of the new conveyor belt.

A disc with suitable diameter (7) is provided with notches (7.1) on its perimeter, said notches being positioned at a distance that is equal to the distance existing between the pins or rollers (1.3) of the wings of the primary element (1).

The pins or rollers (1.3) of the primary elements (1) are housed in the notches (7.1) of the disc (7) which rotates and sets in motion the primary elements (1) and consequently the whole conveyor belt.

Said rollers (1.3) can rotate on their own axis (1.31), in such a way as to be able to slide on appropriate side guides positioned on the curve sections.

In Table 5 the figures from 11 to 15 represent the equivalent of figures from 1 to 5 of a second possible application of the invention for the construction of the primary (1) and secondary (2) elements, in which the upper part of the T-shaped portion (1.2a) and even the secondary element are higher than the same parts shown in the example of Table 1. In this way the conveyor belt serves also to contain the transported products and prevent them from falling down.

The Tables from 6 to 8 represent the equivalent of the tables from 2 to 4 of the second application of the invention.

Table 9 is a plan view in which it is possible to observe how the new conveyor belt can be arranged on three concentric columns (L1, L2, C) among which the conveyor belt (N) slides and wherein a single motor (M) connected to two vertical shafts (A1, A2) transmits motion to the conveyor belt (N) along two columns (L1, L2).

In particular, the central column (C) conveys the belt (N) both to the right tower (L1) and to the left tower (L2), while the right tower (L1) conveys the belt (N) only to the central tower (C) and the left tower (L2) conveys the belt (N) only to the central tower (C).

Tables 10 and 11 show two applications of the invention provided with antifriction elements. Figures 21 and 23 show a plan view, while figures 22 and 24 are section views of the same.

The antifriction elements (3.1) of the guides (6) comprise a section bar in the shape of an upturned U with a wing bent on one side (3.11) and with a protrusion (3.12) in correspondence with the bottom of the U on the side directed towards the modular elements (1, 2) of the conveyor belt.

The antifriction elements (3.2) of the modular elements (1,2) of the conveyor belt have the shape of an upturned T or of an L with a wing (3.21) directed towards the guide (6).

Table 12 shows another application of the invention, in the plan view (figure 25) and the relevant section (figure 26).

In this example the antifriction elements (3.1) of the guides (6) have the shape of an upturned U with a single protrusion (3.12) in correspondence with the bottom of the U on the side directed towards the modular elements (1, 2) of the conveyor belt, while the antifriction elements (3.2) of the modular elements (1, 2) of the conveyor belt have the shape of an L with the wing (3.21) directed towards the guide (6).

This example shows also further antifriction elements (3.3) positioned on the cross bars (3) of the conveyor belt, and in particular on the part of the cross bars that rests on the guides (6).

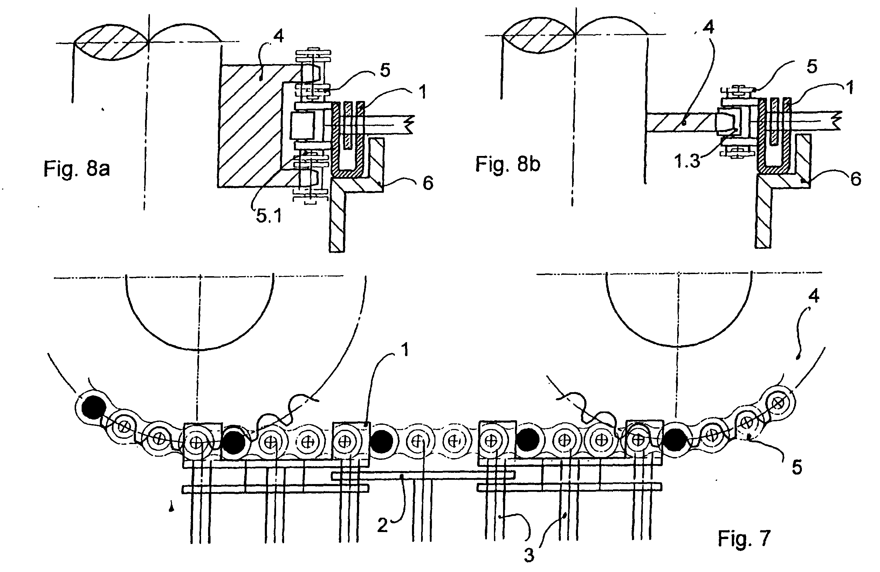

Table 13 represents a further application of the invention in the plan view (figure 7) and the relevant section (figure 28).

This example differs from the example of Table 4 due to the different configuration of the fixed guides (6) with section in the shape of a T postioned on one side and the consequent shape of the antifriction elements (3.1, 3.3) of the guides (6).

In particular, the guides (6) are provided with two separate antifriction elements (3.1, 3.3), the first one of which (3.1) has the shape of an upturned U with a protrusion (3.12) in correspondence with the bottom of the U on the side directed towards the modular elements (1, 2) of the conveyor belt, while the second antifriction element (3.3) has the shape of a simple U covering the horizontal portion of the guide (6) that supports the modular elements (1, 2) of the conveyor belt and the relevant antifriction elements (3.2).

The above are the basic outlines of the invention, on the basis of which the technician will be able to put it into effect; any change which may be necessary upon implementation is to be regarded as completely protected by the present invention, provided that it is based on the same innovative concept described herein.

Therefore, with reference to the above description and to the attached drawings, the following claims are put forth.

## Claims

1. Conveyor belt comprising cross bars driven by two lateral series of alternated modular elements, one type of which with U-shaped section, connected to one another by plane elements, characterized in that said modular elements with U-shaped section are constituted by an element whose plane development can generically be compared to an H-shaped figure with a T at its centre, and wherein the upper part of the T is bent and positioned so that it is parallel to the central part of the H, with a space sufficient for the sliding of the plane elements, while the ends of the H are parallel in pairs and perpendicular to the U-shaped section, thus forming wing-shaped elements, and wherein the parallel parts of the U-shaped section are provided with holes for the fastening to the ends of the conveyor belt cross bars, while the plane elements are provided with slots near their ends, said slots being suitable for allowing the cross bar ends included between the two plane side-by-side parts of the U-shaped elements to slide into them.

2. Conveyor belt according to claim 1, characterized in that the U-shaped element and/or the plane element are higher than the cross bars, that is, they are provided with a plane extension developing upwards with respect to the holes and slots, which means that one side, preferably the inner one, is higher than the other side.

3. Conveyor belt according to claims 1, 2, characterized in that the plane elements are provided with one or more holes for the fastening of the cross bar ends.

4. Conveyor belt according to claims 1, 2, 3, characterized in that the U-shaped elements rest on a Z-shaped section bar that supports them and guides them in the rectilnear sections of their course.

5. Conveyor belt according to claims 1, 2, 3, 4, characterized in that the U-shaped elements are set in motion by one or more parallel chains provided with pins acting on the wings of the U-shaped elements and positioned at regular intervals, wherein said chains engage gear wheels with single or multiple parallel crown gears.

6. Conveyor belt according to claims 1, 2, 3 , 4, characterized in that a cylindrical pin is fixed between each pair of wings of the U-shaped elements, and wherein the various cylindrical pins of the U-shaped elements engage discs the edge of which is provided with notches suitable for housing said pins.

7. Conveyor belt according to claim 6, characterized in that said cylindrical pins are provided with a roller suitable for facilitating the sliding of the inner part of the conveyor belt when there are sharp curves.

8. Conveyor belt according to the previous claims, characterized in that it is arranged on three concentric towers (right, left and central) among which the belt slides and wherein a single motor connected to two vertical shafts transmits motion to the belt along two columns (towers).

9. Conveyor belt according to claim 8, characterized in that the central column conveys the belt to both the right and left column, and wherein the right column conveys the belt only to the central column and the left column conveys the belt only to the central column.

10. Conveyor belt comprising cross bars driven by two lateral series of alternated modular elements, one type of which has U-shaped section, connected to one another by plane elements, characterized in that it is provided with antifriction elements applied to the bottom and/or to the sides of the modular elements (chain) connecting the cross bars of the conveyor belt.

11. Conveyor belt according to claim 10, characterized in that it is provided with antifriction elements applied to the fixed guides of the conveyor belt.

12. Conveyor belt according to claims 10, 11, characterized in that the shape of the antifriction elements applied to the guides is such that they cover the guides on the sides on which they are into contact with the conveyor belt, and wherein said antifriction elements are provided with protrusions directed towards the modualr elements of the conveyor belt, in such a way as to support it even during its return in inverted position.

13. Conveyor belt according to claims 10, 11, 12, characterized in that the antifriction elements applied to the modular elements of the conveyor belt have the shape of an upturned T or of an L, so that they cover the contact sides of the modular elements and the guides, and wherein the wing of the L or one wing of the T is directed towards the guides, in such a way as to support the conveyor belt even during its return in inverted position.

14. Conveyor belt according to claims 10, 11, 12, 13, characterized in that it is provided with antifriction elements, preferibly made of nylon or Teflon, positioned on the part of the conveyor belt cross bars that rests on the guides.
